Europäisches Patentamt

European Patent Office

Office européen des brevets

(19)

(11) **EP 0 867 731 B1**

(12) **FASCICULE DE BREVET EUROPEEN**

(45) Date de publication et mention
de la délivrance du brevet:
**30.07.2003 Bulletin 2003/31**

(51) Int Cl.⁷: **G01S 13/34**

(21) Numéro de dépôt: **98400681.7**

(22) Date de dépôt: **24.03.1998**

(54) **Procédé et dispositif de levée d'ambiguité en distance appliquée notamment à un radar à saut de fréquence**

Verfahren und Vorrichtung zur Entfernungsmehrdeutigkeitsauflösung, insbesondere für Frequenzsprung-Radar

Method and device for distance ambiguity resolution applied particularly to a frequency hopping radar

(84) Etats contractants désignés:
**BE DE ES FR GB IT**

(30) Priorité: **28.03.1997 FR 9703841**

(43) Date de publication de la demande:
**30.09.1998 Bulletin 1998/40**

(73) Titulaire: **Thales**
**75008 Paris (FR)**

(72) Inventeurs:
• **Cornic, Pascal**
**94117 Arcueil Cedex (FR)**
• **Artis, Jean-Paul**
**94117 Arcueil Cedex (FR)**

(56) Documents cités:
**US-A- 3 750 171** **US-A- 3 750 172**

**Description**

La présente invention concerne un procédé et un dispositif de levée d'ambiguïté en distance appliquée notamment à un radar à onde continue et à saut de fréquence. Elle s'applique par exemple aux radars automobiles et plus généralement à des radars à saut de fréquence nécessitant un rendement de détection élevé tout en répondant à un objectif de réalisation à faible coût.

Un radar à onde continue et à saut de fréquence peut émettre selon plusieurs fréquences d'émission, quatre par exemple. Un tel radar peut par exemple équiper une automobile pour une fonction du type ACC selon l'expression anglo-saxonne « Automotive Cruise Control ». Un radar de ce type est destiné à permettre la régulation de l'allure des véhicules automobiles. Il détecte et localise le plus proche véhicule situé dans la voie du véhicule porteur. Les informations, notamment de distance, sont transmises par exemple à un calculateur qui agit, via des interfaces appropriées, sur le contrôle du moteur et des freins de façon à réguler la distance séparant le véhicule porteur de son prédécesseur.

Partant du fait que pour une fréquence d'émission donnée, il est demandé au radar de recevoir pendant cette émission, un problème à résoudre est d'être assuré qu'un signal reçu correspond bien à cette fréquence d'émission donnée. Ce problème à résoudre est assimilable à la résolution des échos de seconde trace et plus pour un radar à impulsion. Dans le cas d'une application à un radar pour automobile ce problème est d'une grande importance dans la mesure où les cibles potentielles du radar ont des surfaces équivalentes radar, appelées SER, très différentes. Il faut en effet éviter par exemple qu'un camion, ayant une très grande SER, pourtant très éloigné du véhicule porteur soit vu comme une petite automobile, de faible SER, très proche.

Une méthode pourrait être utilisée pour résoudre ce problème. Cette méthode joue sur la période de répétition des trames de fréquences. Pour être efficace, cette méthode nécessite de faire varier la période de répétition dans des proportions très importantes, ce qui entraîne ipso facto des facteurs de forme faibles sur les ondes émises. Or, à puissance moyenne donnée, un facteur de forme faible signifie qu'une forte puissance crête doit être émise. Cela n'est pas possible notamment pour des radars automobiles destinés à de la régulation de vitesse où par exemple d'une part on cherche à émettre tout le temps et le plus longtemps possible pour des contraintes d'interférences entre radars, et où d'autre part la perspective d'utilisation de la technologie dite MMIC s'oppose elle-même à de fortes puissances crêtes.

Le but de l'invention est notamment de permettre une méthode de levée d'ambiguïté en distance ne nécessitant pas une augmentation de la puissance crête émise tout en étant économique à mettre en oeuvre, et donc bien adaptée à une application automobile de régulation de vitesse. A cet effet, l'invention a pour objet un procédé de levée d'ambiguïté en distance d'un radar tel que défini dans la revendication 1.

L'invention a également pour objet un dispositif pour la mise en oeuvre du procédé précité, tel que défini dans la revendication 12.

L'invention a pour principaux avantages qu'elle permet une grande fiabilité des distances estimées, qu'elle s'adapte bien à des récepteurs numériques, qu'elle permet des mesures de distances peu sensibles aux dérives de fréquence de l'oscillateur de base et au bruit du récepteur, qu'elle s'adapte à plusieurs types de radars, et qu'elle est simple à mettre en oeuvre.

D'autres caractéristiques et avantages de l'invention apparaîtront à l'aide de la description qui suit faite en regard de dessins annexés qui représentent :

- les figures 1a et 1b, respectivement des exemples de formes d'onde à l'émission et à la réception d'un radar sur lequel est appliqué l'invention ;
- la figure 2, à titre d'exemple la distance estimée à partir de trois fonctions d'estimation ;
- la figure 3, un exemple de représentation d'une fonction de validation de la distance estimée à partir des trois fonctions précédentes ;
- la figure 4, un exemple de réalisation possible pour la mise en oeuvre du procédé selon l'invention.

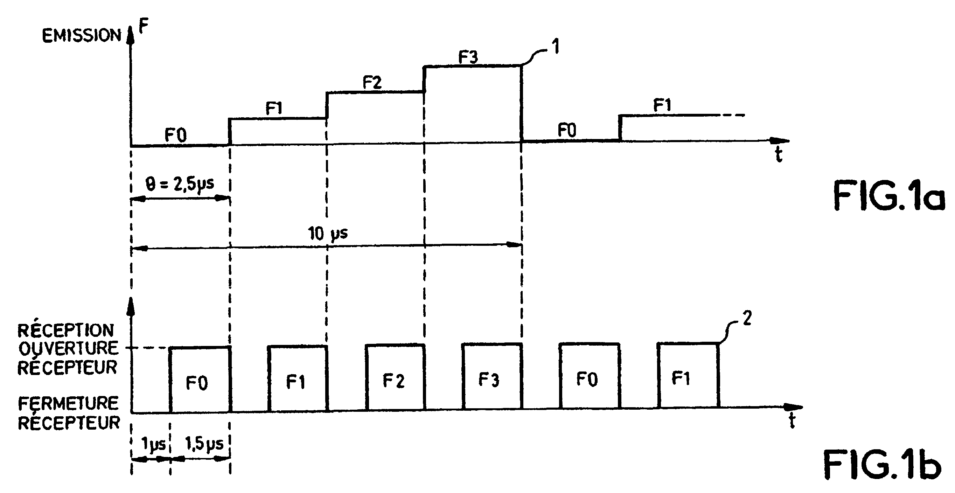

Les figures 1a et 1b présentent en fonction du temps respectivement des exemples de forme d'onde 1 à l'émission et de forme d'onde 2 à la réception d'un radar à onde continu et à saut de fréquence, dans un cas d'utilisation de quatre fréquences F0, F1, F2, F3 donné à titre d'exemple et pour exposer l'invention. Le radar émet, pour chaque récurrence de traitement radar, successivement pendant des durées égales par exemple à 2,5μs un signal à la première fréquence F1, puis un signal à la deuxième fréquence F2, puis un signal à la troisième fréquence F3 puis un signal à la quatrième fréquence F4 puis de nouveau pour la récurrence suivante, un signal à la première fréquence F1 et ainsi de suite. Une récurrence constituée de l'émission selon les quatre fréquences successives F0, F1, F2, F3 est encore appelée une trame. Plus généralement une trame est un motif d'émission qui est répété périodiquement. L'invention est décrite pour une application avec une trame à quatre fréquences, toutefois elle peut être appliquée quelque soit le nombre de fréquences supérieur ou égal à deux. A la réception, durant l'émission de chaque fréquence F0, F1, F2, F3, le récepteur est fermé pendant un temps mort égal par exemple à 1μs en début d'émission de la fréquence, le récepteur étant ouvert pendant la suite de l'émission, par exemple pendant 1,5µs. Le temps mort est notamment prévu pour minimiser la réponse du signal d'écho à une fréquence Fi dans le canal de réception de la fréquence suivante Fi+1, dans la limite de la portée du radar, 150 à 200 mètres par exemple.

Les quatre fréquences F0, F1, F2, F3 peuvent être notée selon les relations suivantes

$$F0 = F + k_0 \nu \qquad (1)$$

$$F1 = F + k_1 \nu \qquad (2)$$

$$F2 = F + k_2 \nu \qquad (3)$$

$$F3 = F + k_3 \nu \qquad (4)$$

où F est une fréquence quelconque dans la bande d'utilisation du radar, par exemple 76 à 77 GHz pour un radar automobile, les coefficients $k_i$ sont quatre entiers différents, et $\nu$ représente une fréquence donnée.

Tant que la cible radar est située dans la portée du radar, soit par exemple dans un rayon compris environ entre 150 et 200 mètres, il n'y a pas ou peu de chevauchements de modulations ou inter modulations possibles entre les signaux de fréquences Fi, Fj différentes. On peut alors en déduire les signaux reçus $r_0$, $r_1$, $r_2$, $r_3$ après démodulation dans les différents canaux de réception correspondant respectivement aux première, deuxième, troisième et quatrième fréquences d'émission et donnés par les relations suivantes :

$$r_0 = e^{4\pi j \frac{d}{c} F} \cdot e^{4\pi j \frac{d}{c} k_0 \nu} \qquad (5)$$

$$r_1 = e^{4\pi j \frac{d}{c} F} \cdot e^{4\pi j \frac{d}{c} k_1 \nu} \qquad (6)$$

$$r_2 = e^{4\pi j \frac{d}{c} F} \cdot e^{4\pi j \frac{d}{c} k_2 \nu} \qquad (7)$$

$$r_3 = e^{4\pi j \frac{d}{c} F} \cdot e^{4\pi j \frac{d}{c} k_3 \nu} \qquad (8)$$

où l'amplitude est normalisée à 1 et où d représente la distance entre le radar et la cible et c la vitesse de la lumière.

En posant :

$$\alpha = \frac{4\pi d}{c} F \qquad (9)$$

et

$$\beta_i = 4\pi \frac{d}{c} k_i \nu \qquad (10)$$

il vient, pour i variant de 0 à 3 :

$$r_i = e^{j\alpha} \cdot e^{j\beta_i} \qquad (11)$$

Pendant une récurrence de traitement radar, il est possible de former à l'aide des quatre signaux reçus $r_i$ disponibles six signaux différence $r_{ij}$ tels que $r_{ij} = r_i - r_j$ où :

$$r_{ij} = e^{j\alpha}\left[e^{j\beta_i} - e^{j\beta_j}\right] = e^{j\alpha}.e^{j\left(\frac{\beta_i-\beta_j}{2}\right)}.\sin\left[\frac{\beta_i-\beta_j}{2}\right]2j \qquad (12)$$

A partir des signaux précédents $r_{ij}$, le procédé peut par exemple former les signaux suivants :

$$u_k = r_{ij}r_{mn}^* \qquad (13)$$

où $r_{mn}^*$ est le nombre complexe conjugué du signal reçu $r_{mn}$, par la suite le signe * affecté à une grandeur signifie qu'il s'agit de son complexe conjugué ;

et où le couple (i, j) est choisi différent du couple (m, n), ce qui donne accès théoriquement à 16 valeurs possibles de l'indice k de la grandeur suivante :

$$u_k = -4e^{\frac{j\left[(\beta_i+\beta_j)-(\beta_m+\beta_n)\right]}{2}}.\sin\left(\frac{\beta_i-\beta_j}{2}\right).\sin\left(\frac{\beta_m-\beta_n}{2}\right) \qquad (14)$$

de la relation (14), il vient que l'argument de la grandeur $u_k$ est donné par la relation suivante :

$$\left|Argument[u_k]\right| = \left|\frac{(\beta_i+\beta_j)-(\beta_m+\beta_n)}{2}\right| \qquad (14')$$

des relations (10) et (14'), en notant $\hat{d}_k$ la distance estimée à partir de la valeur intermédiaire $u_k$, il vient :

$$\left|Argument[u_k]\right| = \left|\frac{2\pi\nu\hat{d}_k\left[(k_i+k_j)-(k_m+k_n)\right]}{c}\right| \qquad (14'')$$

La distance estimée $\hat{d}_k$ est donc déduite de la relation précédente (14') et donnée par la relation suivante :

$$\hat{d}_k = \left|Argument[u_k]\right|\frac{c}{2\pi\nu\left[(k_i+k_j)-(k_m+k_n)\right]} \qquad (15)$$

$\hat{d}_k$ étant une estimation de distance parmi 16 différentes.

Lorsque la cible est au delà de la portée du radar, chaque canal de réception reçoit de cette cible la composition de deux signaux successifs correspondant à deux fréquences d'émission successives. Ceci conduit à un biais, voire à une aberration sur la phase moyenne du signal reçu, ce biais étant fonction directement du temps de propagation aller et retour de l'onde radar à la cible, et de l'écart entre les deux fréquences considérées. Dans ce cas, le traitement précédent conduit à 16 valeurs de l'estimation $d_k$ fortement décorrélées entre elles, à condition que les valeurs $k_i$ et $k_j$ aient été convenablement choisies. Ceci fournit un critère efficace permettant de rejeter dans le traitement radar, les échos provenant d'une distance supérieure à la portée utile. En pratique par exemple, l'utilisation de trois valeurs de k suffit pour lever l'ambiguïté jusqu'à une distance supérieure à 1000 mètres. Ainsi selon l'invention, la distance des cibles est détectée à l'aide de plusieurs fonctions d'estimation $d_k$ de façon à ce que toutes les fonctions d'estimation donnent sensiblement le même résultat quand les cibles sont dans le domaine non ambigu et donnent des résultats différents les unes des autres dès que les cibles sont dans un domaine ambigu.

Le choix du plan de fréquence est par exemple réalisé en fonction d'un certain nombre de contraintes déduites des expressions de $u_k$ et de $d_k$. En particulier, le signal $u_k$ utilisé pour la détection ne doit pas s'annuler dans le domaine de portée du radar en dehors de la distance nulle. Ceci impose notamment les relations suivantes :

$$\frac{\beta_i - \beta_j}{2} \leq \pi \qquad (16)$$

$$\frac{\beta_m - \beta_n}{2} \leq \pi \qquad (17)$$

pour une distance d par exemple égale à 200 mètres, ce qui signifie notamment que tous les termes $(k_i - k_j)\nu$ utilisables sont inférieures ou égaux à 750 kHz, soit :

$$|k_i - k_j|\nu \leq 750kHz \text{ et } |k_m - k_n|\nu \leq 750kHz \qquad (18)$$

De plus, afin de respecter les objectifs de réduction de bruit et de clutter à faible distance, obtenus par la différenciation des signaux reçus aux différentes fréquences, le module de $u_k$ doit par exemple être le plus faible possible pour une distance estimée inférieure à 30 mètres. Par exemple en prenant $|u_k| \leq 0,1$ pour une distance d égale à 30 mètres, il vient :

$$\left|\sin\left[2.10^{-7}\pi\nu\left(k_i - k_j\right)\right]\sin\left[2.10^{-7}\pi\nu\left(k_m - k_n\right)\right]\right| \leq 0,1 \qquad (19)$$

ou encore compte tenu de la condition précédente concernant les termes $(k_i-k_j)\nu$ :

$$(2.10^{-7}\pi)^2\nu^2|(k_i-k_j)(k_m-k_n)| \leq 0,1 \qquad (20)$$

soit :

$$\nu^2|(k_i-k_j)(k_m-k_n)| \leq 2,5.10^{11} \ Hz^2 \qquad (21)$$

Des relations (18) et (21), il vient notamment :

$$|k_m-k_n|\nu \leq 333kHz \qquad (22)$$

Par ailleurs, afin de garantir une sensibilité proche du maximum en limite de portée du radar, le module de $u_k$ peut par exemple être proche de 1 pour une distance d égale à 150 mètres. Par exemple, en fixant $|u_k| \geq 1 / \sqrt{2}$ pour une distance d égale à 150 mètres, la relation suivante est obtenue :

$$\nu^2|(k_i-k_j)(k_m-k_n)| \geq 7,2.10^{10} \ Hz^2 \qquad (23)$$

Des relations (22) et (23), il vient notamment :

$$|k_i - k_j|\nu \leq 216kHz \qquad (24)$$

Une condition pour définir le plan de fréquence peut par exemple imposer que la mesure de la phase correspondant à la distance soit non ambiguë jusqu'à la portée maximum. Dans ce cas, la relation suivante doit être vérifiée pour une distance par exemple égale à 200 mètres :

$$\frac{(\beta_i + \beta_j)\text{-}(\beta_m + \beta_n)}{2} \leq \pi \tag{25}$$

soit par exemple :

$$\nu\left[\left(k_i + k_j\right) - \left(k_m + k_n\right)\right] \leq 750 Hz \tag{26}$$

Enfin, afin de garantir la faisabilité du contrôle de l'oscillateur hyperfréquence, il est souhaitable de n'utiliser que des signaux dont les fréquences diffèrent au minimum par exemple de 200 kHz. Cette condition entraîne les deux relations suivantes :

$$|(k_i - k_j)\nu| > 200 kHz \text{ et } |(k_m - k_n)\nu| > 200 kHz \tag{27}$$

Des conditions précédentes il est par exemple possible de déduire que toute association de quatre signaux utilisés pour l'estimation de distance doit par exemple respecter en fonction des objectifs fixés, au minimum les contraintes définies par les relations (18), (22), (24) et (26), pour tous les couples (i, j), (m, n). A partir de ces contraintes, un plan de fréquence peut par exemple être défini. Les quatre fréquences F0, F1, F2, F3 peuvent notamment être choisies de façon à ce que les fréquences $k_i\nu$ définies par les relations (1), (2), (3), (4) soient sensiblement uniformément réparties entre 0 et 750 kHz. Ces fréquences peuvent par exemple être définies comme suit :

$$k_0\nu \approx 0 \tag{28}$$

$$k_1\nu \approx 250 kHz \tag{29}$$

$$k_2\nu \approx 500 kHz \tag{30}$$

$$k_3\nu \approx 750 kHz \tag{31}$$

le signe $\approx$ signifiant "à peu près égal à".

Le choix des valeurs exactes peut être optimisé à partir de simulations prenant en compte la forme spécifique du radar, en particulier l'ordre d'apparition des différentes fréquences, la durée de chaque créneau d'émission et le temps de ralliement de l'oscillateur local lors des changements de fréquence.

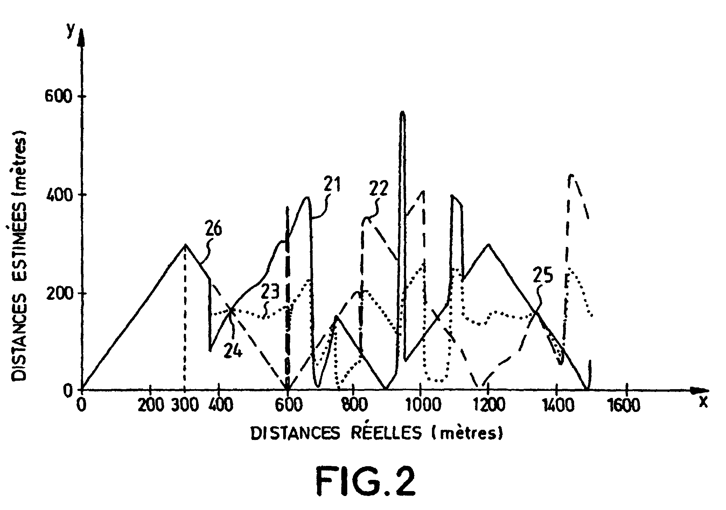

La figure 2 présente à titre d'exemple la distance estimée entre 0 et 1500 mètres, par les trois fonctions d'estimation $d_7, d_8, d_{13}$ définies par les relations suivantes :

$$\hat{d}_7 = \left| Argument\left[(r_0 - r_2)(r_1 - r_2)^{\cdot}\right] \frac{c}{2\pi\nu\left[(k_0 + k_2) - (k_1 + k_2)\right]} \right| \tag{32}$$

$$\hat{d}_8 = \left| Argument\left[(r_0 - r_2)(r_1 - r_3)^{\bullet}\right] \frac{c}{2\pi v\left[(k_0 + k_2) - (k_1 + k_3)\right]} \right| \quad (33)$$

$$\hat{d}_{13} = \left| Argument\left[(r_1 - r_2)(r_1 - r_3)^{\bullet}\right] \frac{c}{2\pi v\left[(k_1 + k_2) - (k_1 + k_3)\right]} \right| \quad (34)$$

avec par exemple $v$ = 250 kHz et $\quad k_0 = 0$, $k_1 = 1$, $k_2 = 2$, $k_3 = 2$.

La figure 2 est une représentation des fonctions d'estimation précédentes dans un système d'axes x, y, l'axe des abscisses x représentant les distances réelles et l'axe des ordonnées y représentant les distances estimée. Une première courbe 21 en trait plein représente la distance estimée par la fonction d'estimation $d_7$, une deuxième courbe 22 en traits discontinus représente la fonction d'estimation $d_{13}$ et une troisième courbe 23 en pointillés représente la fonction d'estimation $d_8$. Ces courbes montrent que les résultats des fonctions d'estimation sont sensiblement égales pour des distances réelles comprises entre 0 et 300 mètres, puis qu'au delà de cette dernière distance les trois valeurs estimées deviennent décorrélées, ce qui fournit un critère permettant de rejeter les cibles ambiguës en distance. Il serait également possible d'utiliser par exemple le module des fonctions $r_{ij}$ ou $u_k$ précédemment définies comme critère d'acceptation ou de rejet des cibles détectées par le radar, ce qui permet notamment d'accroître la robustesse du procédé.

A titre d'exemple, il est possible de définir une fonction de validation des cibles à partir des signaux reçus de la façon suivante :

la fonction de validation est égale à 1 si toutes les relations suivantes (35), (36), (37), (38) sont vérifiées, en notant :

$$\hat{d}\,moy = \frac{\hat{d}_7 + \hat{d}_8 + \hat{d}_{13}}{3}$$

$$|\hat{d}_{13} - \hat{d}_7| \leq 0{,}025\ \hat{d}\,moy \quad (35)$$

$$|\hat{d}_7 - \hat{d}_8| \leq 0{,}025\ \hat{d}\,moy \quad (36)$$

$$|\hat{d}_8 - \hat{d}_{13}| \leq 0{,}025\ \hat{d}\,moy \quad (37)$$

$$\text{signe de } \hat{d}_{13} = \text{signe de } \hat{d}_7 = \text{signe de } \hat{d}_8 \quad (38)$$

la fonction de validation étant nulle dans tous les autres cas.

La fonction de validation est alors égale à 1 lorsque la cible détectée est non ambigüe et égale à 0 dans le cas contraire.

La robustesse de cette fonction de validation peut être améliorée en ajoutant par exemple les contraintes supplémentaires suivantes, en notant:

$$K_1 = \frac{r_0 - r_1}{r_1 - r_2},\ K_2 = \frac{r_1 - r_2}{r_2 - r_3},\ K_3 = \frac{r_0 - r_1}{r_1 - r_3},\ K_4 = \frac{r_0 - r_2}{r_1 - r_3}$$

et

$$Kmoy = \frac{K_1 + K_2 + K_3 + K_4}{4}$$

$$|K_1 - Kmoy| \leq 0{,}5 \tag{39}$$

$$|K_2 - Kmoy| \leq 0{,}5 \tag{40}$$

$$|K_3 - Kmoy| \leq 0{,}5 \tag{41}$$

$$|K_4 - Kmoy| \leq 0{,}5 \tag{42}$$

$$Kmoy \leq 1{,}1 \tag{43}$$

la fonction de validation étant égale à 1 si toutes les relations (35) à (43) sont vérifiées et nulle dans le cas contraire.

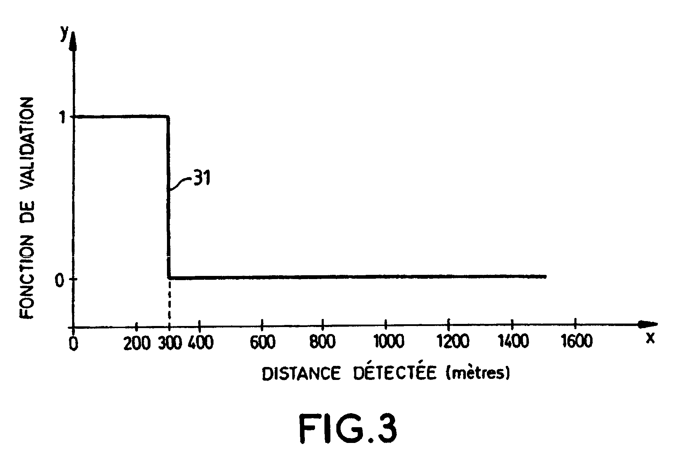

La figure 3 montre un exemple de représentation de cette dernière fonction par une courbe 31 dans un système d'axes x, y, l'axe x des abscisses représentant la distance détectée et l'axe y des ordonnées représentant la valeur de la fonction de validation. Cette courbe 31 montre notamment qu'entre 0 et 300 mètres la cible détectée est considérée comme valide et sera donc prise en compte par le traitement radar, et qu'au delà de 300 mètres la cible n'est jamais validée. En fait la robustesse apportée par les relations (39) à (43) permet de d'éliminer les fausses distances qui correspondent pourtant à des cas où les trois fonctions d'estimations tombent dans les fourchettes définies aux relations (35) à (38). Cela permet notamment d'éliminer des valeurs singulières telles que les points d'intersections isolés 24, 25 des trois courbes 21, 22, 23 représentatives des fonctions d'estimation. Cela permet encore d'éliminer des valeurs fausses bien que corrélées comme par exemple celles comprises sur un segment de droite 26 de pente négative à partir de 300 mètres dans le cas de la figure 2. De telles valeurs sont bien évidemment fausses puisque les distances estimées doivent croître en fonction de la distance réelle. Pour éviter l'ambiguïté apportée par toutes ces valeurs sans faire appel aux conditions supplémentaires de robustesse, il est possible de faire un simple tri en ne retenant que les valeurs estimées en deçà d'un certain seuil, par exemple 200 mètres.

L'exemple de mise en oeuvre précédent du procédé selon l'invention utilise trois fonctions d'estimation. Il est possible de n'en retenir que deux si l'on accepte une robustesse moindre ou si par exemple on la compense par d'autres contraintes supplémentaires. Dans ce cas, le seuil de distance précédent peut par exemple être abaissé. La fiabilité du procédé selon l'invention peut en revanche être renforcée en changeant de fonctions d'estimation à chaque trame, le nombre de fonctions d'estimation étant par exemple égal à trois par trame et par exemple au moins une fonction d'estimation étant changée d'une trame à l'autre. Cela permet en effet de renforcer la fiabilité de la levée d'ambiguïté des cibles en vérifiant que les estimations restent corrélées d'une trame à l'autre bien que les fonctions d'estimation soient différentes.

Une autre mise en oeuvre possible du procédé selon l'invention peut consister par exemple à n'utiliser qu'une seule fonction d'estimation par trame mais à changer de fonction d'estimation à chaque trame. Ainsi, si trois fonctions d'estimation sont utilisées successivement, la levée d'ambiguïté est effectuée toutes les trois trames, le temps nécessaire à l'obtention de trois distances estimées. Un avantage apporté par cette dernière mise en oeuvre est qu'elle ne nécessite pas d'avoir plusieurs canaux de réception, un inconvénient pouvant être cependant qu'il est nécessaire d'attendre par exemple au moins le déroulement de trois trames pour lever l'ambiguïté.

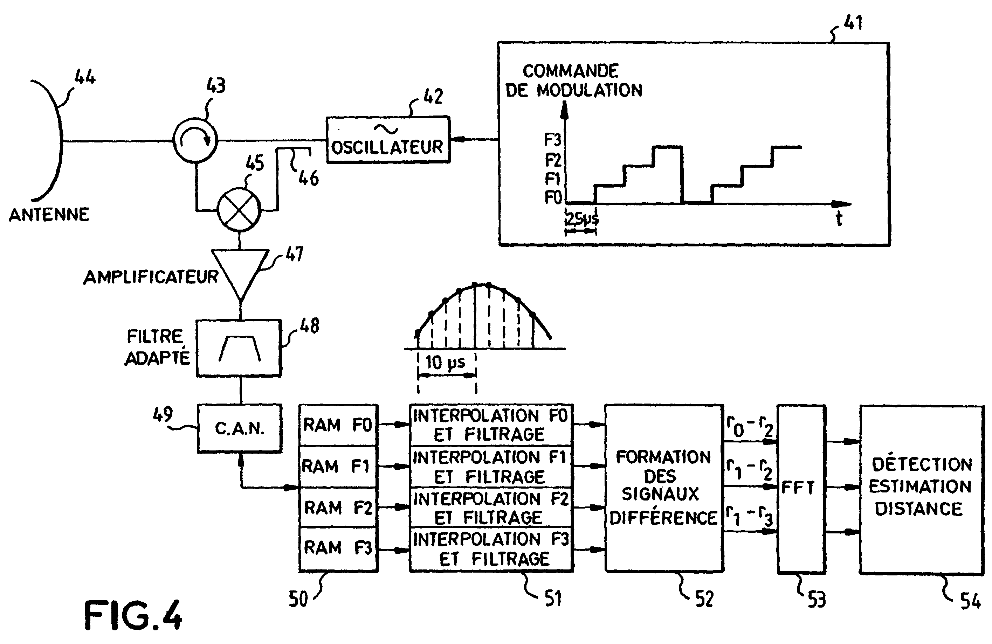

La figure 4 présente par un synoptique un exemple de mode de réalisation possible pour la mise en oeuvre du procédé selon l'invention. Le récepteur peut être analogique, peut utiliser les technologies analogiques et numériques ou peut être entièrement numérique. L'exemple de réalisation présenté par la figure 4 comporte un récepteur entièrement numérique, ce qui constitue une mise en oeuvre simple et fiable. Ce récepteur est par exemple du type homodyne. Cet exemple de réalisation est aussi appliqué à un radar à onde continue et à saut de fréquence, l'onde étant émise selon des trames de quatre fréquences conformément par exemple à la forme présentée par la figure 1.

Des moyens de commande de modulation 41 commandent un oscillateur local 42 de façon à ce que ce dernier délivre quatre fréquences par exemple selon les relations (1) à (4) et les relations (28) à (31). Cet oscillateur 42 est relié à un circulateur 43 pour fournir via ce dernier et des moyens d'amplification non représentés l'onde d'émission à une antenne 44. Un signal reçu par cette antenne est fourni via le circulateur 43 à un mélangeur 45, lequel reçoit par ailleurs via un coupleur 46 le signal de sortie de l'oscillateur 42. Le signal de sortie du mélangeur 45 est par exemple amplifié par un amplificateur 47 dont la sortie est reliée à l'entrée d'un filtre adapté 48. La sortie de ce dernier est reliée l'entrée d'un convertisseur analogique-numérique 49. Ce dernier échantillonne le signal de réception reçu amplifié et filtré puis le convertit numériquement. L'échantillonnage est par exemple réalisé à la fréquence de 400 kHz de façon à générer quatre signaux numériques à la fréquence de 100 kHz correspondant aux quatre fréquences d'émission du radar dans le cas où chaque créneau d'émission a une durée de 2,5 μs. Il y a alors un échantillonnage par créneau d'émission. Le convertisseur est suivi de quatre voies de réception, une voie étant associée à une fréquence d'émission. En cas d'insuffisance de rapidité du convertisseur analogique-numérique, ce dernier peut être remplacé par quatre convertisseurs attribué chacun à une voie ou canal de réception. Chaque voie de réception comporte en entrée une mémoire vive ou RAM 50, destinée à mémoriser le signal échantillonné correspondant à la fréquence de sa voie. La sortie d'une RAM 50 est reliée à des moyens 51 d'interpolation et de filtrage du signal échantillonné. Ces moyens effectuent par exemple une interpolation linéaire de façon à compenser, pour une cible détectée, les éventuelles différences de déphasages Doppler d'un canal à l'autre, ces déphasages étant liés au fait que l'émission et la réception ne s'effectuent pas au même instant sur tous les canaux. Les signaux sont alors filtrés dans un filtre passe-bas dont la fréquence de coupure correspond par exemple au déphasage Doppler maximum, pour une vitesse relative maximum égale par exemple à 160 km/h.

Les moyens d'interpolation et de filtrage 51 sont suivis de moyens 52 de formation des signaux différence. Des moyens 53 de calcul de transformée de Fourier rapide permettent de définir les déphasages entre les déphasages des signaux différence et donc de définir les arguments nécessaires à la fonction d'estimation de distance définie selon la relation (15). Ainsi, en appliquant l'exemple de mise en oeuvre du procédé selon l'invention relativement à la figure 2 et aux relations (32), (33) et (34), les moyens de formation des signaux différence fournissent les signaux $r_0$-$r_2$, $r_1$-$r_2$ et $r_1$-$r_3$. Les moyens 53 de calcul de transformée de Fourier rapide sont appliqués à chacun de ces signaux différence qui délivrent les déphasages calculés à des moyens de calcul 54. Ces derniers ont par exemple en mémoire les valeurs des fréquences $k_i v$ définies par exemple selon les relations (28) à (31) ainsi que les constantes $\pi$ et c. Ils calculent alors les distances estimées conformément aux relations (32) à (34) puis appliquent la fonction de validation définie par les relations (35) à (38) ou (35) à (43), les différents coefficients ou constantes étant mémorisés. Les moyens de calcul 54 sont par exemple contenus dans un calculateur de traitement du signal aux fonctions plus vastes intégrant notamment la détection de vitesse. Les calculs selon les relations précédentes n'exigent pas de circuits supplémentaires particuliers à l'intérieur du calculateur de traitement du signal.

Le procédé selon l'invention ne nécessite pas d'augmentation de la puissance crête émise, un de ces avantages principaux étant le rendement élevé de la forme d'onde utilisée, le rendement étant défini par le rapport de la durée d'ouverture d'un canal de réception sur la durée d'émission de sa fréquence correspondante. Un rendement de 60 % peut par exemple être obtenu. Le procédé selon l'invention est par ailleurs économique dans la mesure notamment où il ne complique pas sensiblement les circuits et qu'il s'adapte bien à un récepteur du type homodyne, lui-même peu coûteux. Il s'adapte par ailleurs particulièrement bien à un récepteur réalisé en technologie numérique, ce qui peut encore contribuer à rendre son application économique. En effet, la plupart des circuits numériques nécessaires peuvent déjà être disponibles par ailleurs, notamment dans le traitement du signal. C'est le cas notamment des moyens de calcul de transformée de Fourier rapide, des moyens de formation des signaux différence et même des moyens d'interpolation et de filtrage ainsi que des mémoires. Une technologie numérique permet de plus d'accroître la fiabilité de détection puisqu'elle ne nécessite pas de réglages particuliers et ne risque pas de subir de dérives dans le temps. Différentes simulations effectués par la Déposante ont par ailleurs montré que le procédé selon l'invention est peu sensible aux dérives de fréquence de l'oscillateur, au bruit du récepteur et au gain différentiel entre les voies de réception. Le dispositif de mise en oeuvre présenté à la figure 4 est incorporé dans un radar à onde continue, il peut cependant être complété pour être adapté à un radar monopulse, les différents canaux de réception pouvant alors être présents sur la voie somme.

Enfin l'invention peut s'appliquer à des radars qui ne sont pas à saut de fréquence. Elle peut par exemple s'appliquer à des radars où la fréquence reste contante mais où c'est la phase qui change, la fonction d'estimation de distance étant alors différente de celle présentée dans cette description. Comme pour un radar à saut de fréquence, le procédé selon l'invention calcule alors la distance de cibles détectées à l'aide de plusieurs fonctions d'estimation de façon telle que toutes les fonctions d'estimation donnent sensiblement le même résultat quand les cibles sont dans le domaine non ambigu et donnent des résultats différents les uns des autres dès que les cibles sont dans le domaine ambigu.

L'invention a été exposée avec l'utilisation d'une forme d'onde d'émission à quatre fréquences. Cependant, elle peut s'appliquer pour un autre nombre de fréquences, par exemple cinq, où les cinq fréquences d'émission sont données par les relations suivantes :

$$F0=F$$

$$F1=F+k_0 \nu \qquad (45)$$

$$F2=F+k_1 \nu \qquad (46)$$

$$F3=F+k_2 \nu \qquad (47)$$

$$F4=F+k_3 \nu \qquad (48)$$

A titre d'exemple, les valeurs de ces fréquences peuvent être sensiblement :

$$F0 = 76 \text{ GHz}$$

$$F1 = F0 + 250 \text{ kHz}$$

$$F2 = F0 + 500 \text{ kHz}$$

$$F3 = F0 + 750 \text{ kHz}$$

$$F4 = F0 + 1000 \text{ kHz}$$

Dans ce cas, les fréquences utiles pour calculer la distance sont par exemple les fréquences F1, F2, F3 et F4, conformément aux relations (5) à (43).

Dans les exemples présentés, le pas entre les fréquences est contant, cela n'est cependant pas obligatoire, en d'autres termes la valeur $\nu$ n'est pas la même d'une fréquence à l'autre mais prend une valeur $\nu_i$ à chaque fréquence. Dans ce cas, le coefficient $\beta_i$ de la relation (10) devient :

$$\beta_i = 4\pi \frac{d}{c} k_l \nu_i$$

Les autres relations peuvent alors être appliquées de la même façon pour le calcul de la distance.

## Revendications

1. Procédé de levée d'ambiguïté en distance d'un radar, **caractérisé en ce qu'**il calcule la distance des cibles détectées par le radar au moyen de plusieurs fonctions d'estimation (21, 22, 23), les cibles étant définies comme étant dans le domaine de distances non ambigu quand les fonctions d'estimation donnent sensiblement le même résultat, et les cibles étant définies comme étant dans le domaine de distances ambigu quand les fonctions d'estimation donnent des résultats différents, la fonction d'estimation de la distance étant définie par la relation suivante :

$$\hat{d}_k = \left| Argument[u_k] \frac{c}{2\pi v \left[ (k_i + k_j) - (k_m + k_n) \right]} \right|$$

- $\hat{d}_k$ étant la distance estimée ;
- c étant la vitesse de la lumière ;
- $u_k = (r_i - r_j)(r_m - r_n)^*$, $r_i$, $r_j$, $r_m$ et $r_n$ étant respectivement les signaux reçus relativement à la fréquence d'ordre i, j, m, n d'une trame d'émission ;
- $k_i$, $k_j$, $k_m$ et $k_n$ étant des coefficients définissant des fréquences d'émission Fi, Fj, Fm, Fn de la trame de la façon suivante :

$$Fi = F + k_i v_i$$

$$Fj = F + k_j v_j$$

$$Fm = F + k_m v_m$$

$$Fn = F + k_n v_n$$

F étant une fréquence de base donnée et $v_i$, $v_j$, $v_m$, $v_n$ étant des fréquences complémentaires données.

**2.** Procédé selon la revendication 1, **caractérisé en ce que** les fréquences complémentaires $v_l$, $v_j$, $v_m$, $v_n$ sont sensiblement égales à une fréquence donnée $v$.

**3.** Procédé selon l'une quelconque des revendications précédentes, **caractérisé en ce qu'**au moins une fonction d'estimations est modifiée d'une trame d'émission (F0, F1, F2, F3, F4) à l'autre.

**4.** Procédé selon la revendication 3, **caractérisé en ce qu'**une seule estimation est effectuée par trame d'émission (F0, F1, F2, F3, F4).

**5.** Procédé selon l'une quelconque des revendications précédentes, **caractérisé en ce que** les mêmes fonctions d'estimation sont utilisées d'une trame d'émission (F0, F1, F2, F3, F4) à l'autre.

**6.** Procédé selon l'une quelconque des revendications précédentes, **caractérisé en ce que** le radar étant à saut de fréquence, chaque trame comportant un nombre donné de fréquences d'émission successives, les fonctions d'estimation sont basées sur la différence de phase entre des signaux différence obtenus à partir de couples de signaux reçus, chaque signal correspondant à une fréquence de la trame.

**7.** Procédé selon l'une quelconque des revendications précédentes, **caractérisé en ce que** la fréquence de base F est comprise dans la bande 76-77 Ghz.

**8.** Procédé selon l'une quelconque des revendications 2 à 7, **caractérisé en ce qu'**une trame comportant quatre fréquences (F0, F1, F2, F3), les coefficients $k_i$, $k_j$, $k_m$ et $k_n$ sont sensiblement égaux respectivement à 0, 1, 2 et 3 et la fréquence complémentaire $v$ est sensiblement égale à 250 kHz.

**9.** Procédé selon l'une quelconque des revendications 2 à 7, **caractérisé en ce qu'**une trame comportant cinq fréquences (F0, F1, F2, F3, F4), la première fréquence (F0) étant égale à la fréquence de base F, les coefficients $k_i$, $k_j$, $k_m$ et $k_n$ sont sensiblement égaux respectivement à 0, 1, 2 et 3 et la fréquence complémentaire $v$ est sensiblement égale à 250 kHz.

**10.** Procédé selon l'une quelconque des revendications précédentes, **caractérisé en ce que** le nombre de fonctions d'estimations utilisées par trame de fréquence est égal à trois.

**11.** Procédé selon la revendication 10, **caractérisé en ce que** les trois fonctions d'estimation $\hat{d}_7, \hat{d}_8, \hat{d}_{13}$ sont définies par les relations suivantes :

$$\hat{d}_7 = \left| Argument\left[(r_0 - r_2)(r_1 - r_2)^*\right] \frac{c}{2\pi v\left[(k_0 + k_2) - (k_1 + k_2)\right]} \right|$$

$$\hat{d}_8 = \left| Argument\left[(r_0 - r_2)(r_1 - r_3)^*\right] \frac{c}{2\pi v\left[(k_0 + k_2) - (k_1 + k_3)\right]} \right|$$

$$\hat{d}_{13} = \left| Argument\left[(r_1 - r_2)(r_1 - r_3)^*\right] \frac{c}{2\pi v\left[(k_1 + k_2) - (k_1 + k_3)\right]} \right|$$

**12.** Dispositif pour la mise en oeuvre du procédé selon l'une quelconque des revendications précédentes, **caractérisé en ce que** le radar étant à saut de fréquence, il comporte au moins :

- une voie de réception associée à chaque fréquence d'émission (F0, F1, F2, F3), chaque voie comportant au moins un convertisseur anologique-numérique (49) échantillonnant le signal reçu, une mémoire (50) pour mémoriser le signal échantillonné, et des moyens (51) d'interpolation et de filtrage du signal échantillonné ;
- des moyens (52) de formation des signaux différence, chaque voie étant reliée en sortie à ces moyens (52) effectuant la différence de signaux pris deux à deux chacun dans une voie différente ;
- des moyens (53) de calcul de transformée de Fourier rapide destinés à définir le déphasage entre les signaux différence ;
- des moyens (54) de calcul des estimations de distances à partir des déphasages précités.

**13.** Dispositif selon la revendication 11, **caractérisé en ce que** les moyens (51) d'interpolation et de filtrage effectuent une interpolation linéaire de façon à compenser, pour une cible détectée, les éventuelles différences de déphasages Doppler d'une voie à l'autre, ces déphasages étant liés au fait que l'émission et la réception ne s'effectuent pas au même instant sur tous les canaux.

**14.** Dispositif selon l'une quelconque des revendications 11 ou 12, **caractérisé en ce que** les moyens (51) d'interpolation et de filtrage effectuent un filtrage passe-bas dont la fréquence de coupure correspond au déphasage Doppler maximum.

**15.** Dispositif selon l'une des revendications 10 à 13, **caractérisé en ce que** ses circuits sont en technologie numérique.

**Patentansprüche**

**1.** Verfahren zum Beseitigen der Entfernungsmehrdeutigkeit eines Radars, **dadurch gekennzeichnet, daß** die Entfernung von von dem Radar erfaßten Zielen mittels mehrerer Schätzfunktionen (21, 22, 23) berechnet wird, wobei die Ziele als in einem nicht mehrdeutigen Entfernungsbereich befindlich definiert werden, wenn die Schätzfunktionen im wesentlichen das gleiche Resultat ergeben, und wobei die Ziele als in einem mehrdeutigen Entfernungsbereich befindlich definiert werden, wenn die Schätzfunktionen unterschiedliche Resultate ergeben, wobei die Schätzfunktion für die Entfernung durch die folgende Beziehung definiert ist:

$$\hat{d}_k = \left| \text{Argument}[u_k] \frac{c}{2\pi v \left[(k_i + k_j)(k_m + k_n)\right]} \right|$$

wobei

- $\hat{d}_k$ die geschätzte Entfernung ist;

- c die Lichtgeschwindigkeit ist;

- $u_k = (r_i - r_j)(r_m - r_n)^*$, wobei $r_i$, $r_j$, $r_m$ und $r_n$ die Signale sind, die in bezug auf die Frequenz mit Rang i, j, m bzw. n eines Senderahmens empfangen werden;

- $k_i$, $k_j$, $k_m$ und $k_n$ Koeffizienten sind, die die Sendefrequenzen Fi, Fj, Fm und Fn des Rahmens in der folgenden Weise definieren:

$$Fi = F + k_i v_i$$

$$Fj = F + k_j v_j$$

$$Fm = F + k_m v_m$$

$$Fn = F + k_n v_n$$

wobei F eine gegebene Grundfrequenz ist und $v_i$, $v_j$, $v_m$ und $v_n$ gegebene komplementäre Frequenzen sind.

2. Verfahren nach Anspruch 1, **dadurch gekennzeichnet, daß** die komplementären Frequenzen $v_i$, $v_j$, $v_m$, $v_n$ im wesentlichen gleich einer gegebenen Frequenz $v$ sind.

3. Verfahren nach einem der vorhergehenden Ansprüche, **dadurch gekennzeichnet, daß** wenigstens eine Schätzfunktion von einem Senderahmen (F0, F1, F2, F3, F4) zum nächsten modifiziert wird.

4. Verfahren nach Anspruch 3, **dadurch gekennzeichnet, daß** pro Senderahmen (F0, F1, F2, F3, F4) nur eine Schätzung ausgeführt wird.

5. Verfahren nach einem der vorhergehenden Ansprüche, **dadurch gekennzeichnet, daß** von einem Senderahmen (F0, F1, F2, F3, F4) zum nächsten dieselben Schätzfunktionen verwendet werden.

6. Verfahren nach einem der vorhergehenden Ansprüche, **dadurch gekennzeichnet, daß** die Schätzfunktionen dann, wenn das Radar ein Frequenzsprung-Radar ist und jeder Rahmen eine gegebene Anzahl aufeinanderfolgender Sendefrequenzen besitzt, auf der Phasendifferenz zwischen den Differenzsignalen basiert, die anhand von Paaren empfangener Signale erhalten werden, wobei jedes Signal einer Frequenz des Rahmens entspricht.

7. Verfahren nach einem der vorhergehenden Ansprüche, **dadurch gekennzeichnet, daß** die Grundfrequenz F im Band von 76-77 GHz enthalten ist.

8. Verfahren nach einem der Ansprüche 2 bis 7, **dadurch gekennzeichnet, daß** die Koeffizienten $k_i$, $k_j$, $k_m$ und $k_n$ dann, wenn ein Rahmen vier Frequenzen (F0, F1, F2, F3) enthält, im wesentlichen gleich 0, 1, 2 bzw. 3 sind und die komplementäre Frequenz $v$ im wesentlichen gleich 250 kHz ist.

9. Verfahren nach einem der Ansprüche 2 bis 7, **dadurch gekennzeichnet, daß** die Koeffizienten $k_i$, $k_j$, $k_m$ und $k_n$ dann, wenn ein Rahmen fünf Frequenzen (F0, F1, F2, F3, F4) enthält und die erste Frequenz (F0) gleich der Grundfrequenz F ist, im wesentlichen gleich 0, 1, 2 bzw. 3 sind und die komplementäre Frequenz ν im wesentlichen gleich 250 kHz ist.

10. Verfahren nach einem der vorhergehenden Ansprüche, **dadurch gekennzeichnet, daß** die Anzahl der verwendeten Schätzfunktionen pro Frequenzrahmen gleich drei ist.

11. Verfahren nach Anspruch 10, **dadurch gekennzeichnet, daß** die drei Schätzfunktionen $\hat{d}_7$, $\hat{d}_8$, $\hat{d}_{13}$ durch die folgenden Beziehungen definiert sind:

$$\hat{d}_1 = \left| Argument\left[ (r_0 - r_2)(r_1 - r_2)^* \right] \frac{c}{2\pi\nu\left[ (k_0 + k_2) - (k_1 + k_2) \right]} \right|$$

$$\hat{d}_8 = \left| Argument\left[ (r_0 - r_2)(r_1 - r_3)^* \right] \frac{c}{2\pi\nu\left[ (k_0 + k_2) - (k_1 + k_3) \right]} \right|$$

$$\hat{d}_{13} = \left| Argument\left[ (r_1 - r_2)(r_1 - r_3)^* \right] \frac{c}{2\pi\nu\left[ (k_1 + k_2) - (k_1 + k_3) \right]} \right|$$

12. Vorrichtung für die Ausführung des Verfahrens nach einem der vorhergehenden Ansprüche, **dadurch gekennzeichnet, daß** sie, wenn das Radar ein Frequenzsprungradar ist, wenigstens umfaßt:

-   Empfangswege, die jeweils einer Sendefrequenz (F0, F1, F2, F3) zugeordnet sind, wobei jeder Weg wenigstens einen Analog/Digital-Umsetzer (49), der das empfangene Signal abtastet, einen Speicher (50) zum Speichern des abgetasteten Signals und Mittel (51) für die Interpolation und Filterung des abgetasteten Signals umfaßt;

-   Mittel (52) für die Bildung der Differenzsignale, wobei jeder Weg am Ausgang mit diesen Mitteln (52) verbunden ist, die die Differenz von Signalen bilden, die in einem anderen Weg jeweils paarweise abgegriffen werden;

-   Mittel (53) für die Berechnung der schnellen Fourier-Transformation, die dazu bestimmt sind, die Phasenverschiebung zwischen den Differenzsignalen zu definieren;

-   Mittel (54) für die Berechnung der Entfernungsschätzungen anhand der obengenannten Phasenverschiebungen.

13. Vorrichtung nach Anspruch 11, **dadurch gekennzeichnet, daß** die Mittel (51) zur Interpolation und Filterung eine lineare Interpolation ausführen, um für ein erfaßtes Ziel die eventuellen Doppler-Phasenverschiebungsunterschiede von einem Weg zum nächsten zu kompensieren, wobei diese Phasenverschiebungen mit der Tatsache in Beziehung stehen, daß das Senden und Empfangen nicht in allen Kanälen zum gleichen Zeitpunkt stattfindet.

14. Vorrichtung nach einem der Ansprüche 11 oder 12, **dadurch gekennzeichnet, daß** die Mittel (51) zur Interpolation und Filterung eine Tiefpaßfilterung ausführen, deren Kappungsfrequenz der maximalen Doppler-Phasenverschiebung entspricht.

15. Vorrichtung nach einem der Ansprüche 10 bis 13, **dadurch gekennzeichnet, daß** ihre Schaltungen in digitaler Technik ausgeführt sind.

**Claims**

1. Method of distance ambiguity resolution for a radar, **characterized in that** said method computes the distance from the targets detected by the radar by means of several estimation functions (21, 22, 23), the targets being defined as being in the non-ambiguous domain of distances when the estimation functions give substantially the same result, and the targets being defined as being in the ambiguous domain of distances when the estimation functions give different results, the distance estimation function being defined by the following relationship:

$$\hat{d}_k = \left| Argument[u_k] \frac{c}{2\pi v\left[(k_i + k_j) - (k_m + k_n)\right]} \right|$$

- $\hat{d}$ being the estimated distance;
- c being the velocity of light;
- $u_k = (r_i - r_j)(r_m - r_n)^*$, $r_i$, $r_j$, $r_m$, and $r_n$ being respectively the signals received in relation to the i, j, m, n order frequency of a transmission frame;
- $k_i$, $k_j$, $k_m$ and $k_n$ being coefficients defining frequencies Fi, Fj, Fm, Fn of transmission of the frame as follows:

$$Fi=F+k_i v_i$$

$$Fj=F+k_j v_j$$

$$Fm=F+k_m v_m$$

$$Fn=F+k_n v_n$$

F being a given base frequency and $v_i$, $v_j$, $v_m$, $v_n$ being complementary frequencies that are given.

2. Method according to claim 1, **characterized in that** the complementary frequencies $v_i$, $v_j$, $v_m$, $v_n$ are substantially equal to a given frequency v.

3. Method according to any one of the preceding claims, **characterized in that** at least one estimation function is modified from one transmission frame (F0, F1, F2, F3, F4) to another.

4. Method according to claim 3, **characterized in that** only one estimation is performed per transmission frame (F0, F1, F2, F3, F4).

5. Method according to any one of the preceding claims, **characterized in that** the same estimation functions are used from one transmission frame (F0, F1, F2, F3, F4) to another.

6. Method according to any of the preceding claims, **characterized in that** the radar being a frequency-hopping radar, each frame comprising a given number of successive transmission frequencies, the estimation functions are based on the phase difference between difference signals obtained from pairs of received signals, each signal corresponding to a frequency of the frame.

7. Method according to any of the preceding claims, **characterized in that** the base frequency F is within the 76-77 GHz band.

8. Method according to any of claims 2 to 7, **characterized in that** , with a frame comprising four frequencies (F0, F1, F2, F3), the coefficients $k_i$, $k_j$, $k_m$ and $k_n$ are substantially equal respectively to 0, 1, 2 and 3 and the complementary frequency v is substantially equal to 250 kHz.

9. Method according to any of claims 2 to 7, **characterized in that** with a frame comprising five frequencies (F0, F1, F2, F3, F4), the first frequency (F0) being equal to the base frequency F, the coefficients $k_i$, $k_j$, $k_m$ and $k_n$ are substantially equal respectively to 0, 1, 2 and 3 and the complementary frequency v is substantially equal to 250 kHz.

10. Method according to one of the preceding claims, **characterized in that** the number of estimation functions used per frequency frame is equal to three.

11. Method according to claim 10, **characterized in that** the three estimation functions $\hat{d}_7$, $\hat{d}_8$, $\hat{d}_{13}$ are defined by the following relationships:

$$\hat{d}_7 = \left| Argument\left[ (r_0 - r_2)(r_1 - r_2)^* \right] \frac{c}{2\pi v\left[ (k_0 + k_2) - (k_1 + k_2) \right]} \right|$$

$$\hat{d}_8 = \left| Argument\left[ (r_0 - r_2)(r_1 - r_3)^* \right] \frac{c}{2\pi v\left[ (k_0 + k_2) - (k_1 + k_3) \right]} \right|$$

$$\hat{d}_{13} = \left| Argument\left[ (r_1 - r_2)(r_1 - r_3)^* \right] \frac{c}{2\pi v\left[ (k_1 + k_2) - (k_1 + k_3) \right]} \right|$$

12. Device for implementation of the method according to any of the preceding claims, **characterized in that** the radar, being a frequency-hopping radar, comprises at least:

- one reception channel associated with each transmission frequency (F0, F1, F2, F3), each channel comprising at least one analogue-digital converter (49) sampling the received signal, a memory (50) to store the sampled signal and means (51) for the interpolation and filtering of the sampled signal;
- means (52) for the formation of the difference signals, each channel being connected at output to these means (52), calculating the difference of signals taken two by two, each in a different channel;
- fast Fourier transform computation means (53) designed to define the phase shift between the difference signals;
- means (54) for the computation of the estimations of distances from the above-mentioned phase shifts.

13. Device according to claim 11, **characterized in that** the interpolation and filtering means (51) carry out a linear interpolation so as to obtain compensation, with respect to a detected target, for any differences in Doppler phase shifts between one channel and another, these phase shifts being related to the fact that the transmission and the reception are not done at the same instant on all the channels.

14. Device according to either of claims 11 and 12, **characterized in that** the interpolation and filtering means (51) carry out a lowpass filtering whose cutoff frequency corresponds to the maximum Doppler phase shift.

15. Device according to any of claims 10 to 13, **characterized in that** its circuits are digital technology circuits.

EMISSION ▲ F

F0    F1    F2    F3 ⌒ 1    F0    F1

θ = 2,5µs

10 µs

**FIG.1a**

RÉCEPTION
OUVERTURE
RÉCEPTEUR

| F0 | F1 | F2 | F3 | F0 | F1 ⌒ 2 |

FERMETURE
RÉCEPTEUR

1µs  1,5µs

**FIG.1b**

FIG.2

FIG.3

EP 0 867 731 B1

FIG.4